# EUROPÄISCHE PATENTSCHRIFT

(11) **EP 4 420 846 B1**
(45) Veröffentlichungstag und Bekanntmachung des Hinweises auf die Patenterteilung: **22.01.2025**
(21) Anmeldenummer: 23157944.2
(22) Anmeldetag: 22.02.2023
(51) Int. Cl.: B26D 7/06

(54) **PRODUKTFÜHRUNG MIT TRAKTIONSROLLE**
PRODUCT GUIDE WITH TRACTION ROLLER
GUIDAGE DE PRODUIT AVEC ROULEAU DE TRACTION

(43) Veröffentlichungstag der Anmeldung: 28.08.2024
(73) Patentinhaber: Weber Food Technology GmbH, 35236 Breidenbach (DE)
(72) Erfinder: Harder, Andreas, 35043 Marburg (DE); Janczyk, Markus, 57334 Bad Laasphe (DE); Schlaf, Maurice, 57319 Bad Berleburg (DE); Geil, Thorben, 35713 Eschenburg-Simmersbach (DE)
(74) Vertreter: Grünecker Patent- und Rechtsanwälte PartG mbB

(56) Entgegenhaltungen:
- CN-U- 209 831 826
- US-A1- 2015 321 372
- US-A1- 2018 071 941

## Beschreibung

Die vorliegende Erfindung betrifft eine Produktführung zum Zuführen von Lebensmittelprodukten zu einer Aufschneideeinheit einer Lebensmittelaufschneidemaschine und eine Lebensmittelaufschneidemaschine.

Lebensmittelprodukte, beispielsweise Wurst, Käse oder Brot liegen häufig als längliche Lebensmittelriegel vor und werden in einer Lebensmittelaufschneidemaschine, welche ein Hochleistungs-Slicer sein kann, einer Aufschneideeinheit mit einem Schneidmesser, beispielsweise mit einem rotierenden Sichel- oder Kreismesser, zugeführt. Dazu sind in einem Zuführbereich eine oder mehrere Produktführungen vorgesehen, welche mit dem Lebensmittelriegel in Anlage kommen, um diesen zu einer Schneidebene der Aufschneideeinheit zu bewegen. Die Produktführung kann insbesondere als oberer Produktniederhalter, welcher von oben auf den Lebensmittelriegel drückt, ausgebildet sein. Ein Beispiel davon offenbart die US 2015/321372 A1, das Produkt wird zwischen einem oberen Förderband und einem unteren Förderband dem Schneidmesser zugeführt.

Die bekannten Varianten einer Produktführung können, insbesondere im Hinblick auf produkt- und/oder anwendungsspezifische Anforderungen, mit Nachteilen behaftet sein.

Aufgabe der Erfindung ist es, eine alternative Produktführung bereitzustellen.

In einer Lebensmittelaufschneidemaschine, insbesondere einem Hochleistungs-Slicer, können ein oder mehrere Lebensmittelprodukte mittels einer Aufschneideeinheit zu Lebensmittelscheiben aufgeschnitten werden. Die Aufschneideeinheit kann ein rotatorisch und/oder planetarisch umlaufendes Schneidmesser, insbesondere Sichel- oder Kreismesser, umfassen.

Ein Lebensmittelprodukt kann in der Lebensmittelaufschneidemaschine zunächst auf einem Eintaktband vorliegen oder auf dieses aufgelegt oder aufgefördert werden. Über dem Eintaktband kann eine Spurführung mit Mitteltrennstegen, insbesondere Blechen, angebracht sein, welche von oben her bis kurz über die Bandoberfläche des Eintaktbands reichen. Diese Mitteltrennstege sind in ihrer lateralen Position an die Breite des aufzuschneidenden Lebensmittelprodukts einstellbar. Von dem Eintaktband kann das Lebensmittelprodukt auf ein Produktförderband gefördert werden.

Das in Förderrichtung an das Eintaktband anschließende Produktförderband kann Teil einer Beladeschwinge sein und um eine an seiner stromabwärtigen Seite befindlichen Achse nach oben hin schwenkbar sein. So kann das Lebensmittelprodukt in der Horizontalen von dem Eintaktband auf das Produktförderband gefördert werden und anschließend das Produktförderband nach oben verschwenkt werden, um das Lebensmittelprodukt in einer gegen die Horizontalen geneigten Auflageebene dem Schneidmesser zuzuführen. Es kann ein seitlicher Festanschlag vorgesehen sein, dessen Querposition und Längsausrichtung auf eine Schneidkante oder Schneidbrille abgestimmt ist, die beim Abtrennen der Scheiben vom Produkt mit dem Schneidmesser zusammenwirkt. Auf der dem festen Seitenanschlag gegenüberliegenden Seite kann ein parallel verlaufender Seitenanschlag angeordnet sein. Hierdurch kann das Lebensmittelprodukt eine Längsführung erfahren. Der verstellbare Seitenanschlag kann in Querrichtung verstellbar sein, um auf diese Weise ein Produkt in Querrichtung auszurichten. Bei einer mehrspurigen Lebensmittelaufschneidemaschine, die mehrere parallel nebeneinanderliegende Produkte gleichzeitig aufschneiden kann, sind die Produktzuführungen entsprechend mehrspurig ausgebildet. Entsprechend können im Bereich des Produktförderbands mehrere Seitenanschläge vorgesehen sein, welche lateral zur Förderrichtung verstellbar sind. Die Seitenanschläge können gemeinsam verstellbar sein.

Zwischen Produktförderband und Schneidmesser kann eine Produktfördervorrichtung in Form einer unteren Produktauflage angeordnet sein, welche das Lebensmittelprodukt dem Schneidmesser zuführt. Die Produktauflage kann im Vergleich zum Produktförderband relativ kurz sein. Die Produktauflage kann bis unmittelbar vor die Schneidkante reichen und das Lebensmittelprodukt somit bis zur Schneidkante unterstützen. Die Produktauflage kann einen genauen Produktvorschub in die Schneidebene unterstützten.

Es kann ein Greifer vorgesehen sein, welcher mit einem hinteren Ende, insbesondere einem stromaufwärtigen Ende, eines Lebensmittelprodukts ein Eingriff kommt und als Produkthalter bei der Produktzufuhr zur Schneidebene mitwirkt. Mittels der Führung durch den Greifer können Unterschiede im Gewichts- oder Querschnittsverlauf der Produkte ausgeglichen werden und die Dicke der abgetrennten Produktscheiben für die zugeführten Produkte unabhängig voneinander während des Aufschneidens verändert werden, um so ein vorgegebenes Gewicht von einzelnen Produktscheiben oder das Gewicht von Portionen aus mehreren Scheiben individuell erreichen zu können. Durch das Zurückziehen des Lebensmittelprodukts mittels dem Greifer kann ein Abstand zum Schneidmesser für Leerschnitte hergestellt werden. Bei mehrspurigen Lebensmittelaufschneidemaschinen kann ein Greifer pro Förderspur vorgesehen sein und die Greifer können an einer gemeinsamen Zuführeinheit befestigt und unabhängig voneinander relativ zu der Zuführeinheit in der Förderrichtung ausfahrbar und entgegen der Förderrichtung einfahrbar sein.

Es kann eine obere Produktführung vorgesehen sein, welche in Form eines Produktniederhalters von oben auf das Lebensmittelprodukt drückt, um so den Vorschub zu unterstützen.

Die mittels dem Schneidmesser von dem Lebensmittelprodukt abgetrennten Lebensmittelscheiben können auf eine Portioniereinheit, insbesondere ein Portionierband, fallen. Die Portioniereinheit kann verstellbar sein, so dass eine Portion, insbesondere ein Stapel von Lebensmittelscheiben, mit definierter Größe und Anordnung erstellbar ist. Die Portioniereinheit, insbesondere eine Förder- bzw. Auflagefläche der Portioniereinheit, kann höhenverstellbar sein, um einen gleichbleibenden Fallweg der Scheiben zu gewährleisten. Die Portioniereinheit bzw. deren Auflagefläche kann in Förderrichtung oder seitlich verschiebbar sein oder beides, um definierte Stapelformen, beispielsweise eine geschindelte Anordnung, zu realisieren. Ist eine vollständige Portion erstellt, kann diese mittels der Auflagefläche abgefördert werden.

Während des Aufschneidens der Lebensmittelportion können Trennblätter automatisch mittels eines Trennblatteinlegers, auch "Interleaver" genannt, zwischen die Lebensmittelscheiben auf der Portioniereinheit eingelegt werden.

Bei mehrspurigen Lebensmittelaufschneidemaschinen können mehrere Lebensmittelprodukte parallel aufgeschnitten werden. Es können die zum Produktvorschub beitragenden Elemente spurindividuell steuerbar sein. Insbesondere können die Lebensmittelprodukte mit unterschiedlichen Geschwindigkeiten dem Schneidmesser zugeführt werden.

Gemäß einem ersten Aspekt bezieht sich die Erfindung auf eine Produktführung zum Zuführen von Lebensmittelprodukten zu einer Aufschneideeinheit einer Lebensmittelaufschneidemaschine. Die Produktführung umfasst eine Traktionsrolle, die ausgelegt ist in Förderkontakt mit einem Lebensmittelprodukt zu kommen und dazu beizutragen das Lebensmittelprodukt der Aufschneideeinheit zuzuführen. Die Produktführung umfasst des Weiteren einen Träger, wobei der Träger um eine erste Achse schwenkbar anordenbar ist, und ein Antriebsmittel, konfiguriert die Traktionsrolle um eine zweite Achse zu rotieren. Die Traktionsrolle ist an dem Träger angeordnet und die erste Achse ist von der zweiten Achse beabstandet.

Der Träger kann um eine erste horizontale Achse schwenkbar anordenbar sein.

Die Produktführung kann ihre Ausrichtung an die Größe, insbesondere die Höhe, des Lebensmittelprodukts anpassen. Die Traktionsrolle kann nahe an der Aufschneideeinheit positioniert sein. Der Anpressdruck kann auf die Art oder den Zustand des Lebensmittelprodukts eingestellt werden, beispielsweise auf die Nachgiebigkeit und die Oberflächenbeschaffenheit. Bei Riegeln eines weicheren Lebensmittelprodukts kann ein geringerer Anpressdruck als bei Riegeln eines härteren Lebensmittelprodukts eingestellt werden. Somit wird die Struktur des Lebensmittelprodukts nicht beeinträchtigt, jedoch ein präziser Vorschub gewährleistet.

Der Träger kann ausgelegt sein, während des Betriebs zu verschwenken. So kann ein Anpressdruck variiert werden. Die Produktführung kann auf die Größe, insbesondere Höhe, des Lebensmittelprodukts eingestellt werden. Die Einstellung kann vor dem eigentlichen Produktionsbetrieb erfolgen. Der Träger kann ausgelegt sein, während des Betriebs vertikal, insbesondere vertikal in einem begrenzten Bereich, zu verschwenken. Beim Einfahren des Lebensmittelprodukts in den Wirkbereich der Produktführung kann diese automatisch der Kontur des Lebensmittelprodukts folgen, insbesondere von einer unteren Stellung, welche unterhalb der oberen Produktkante liegt, nach oben schwenken, um mit der Oberseite des Lebensmittelprodukts in Anlage zu kommen.

Die Produktführung kann eine obere Produktführung, insbesondere ein Produktniederhalter, sein. Die Traktionsrolle kann mit der Oberseite des Lebensmittelprodukts, insbesondere des Lebensmittelriegels, in Anlage kommen. Damit kann in gewissem Maße ein Einklemm-Effekt erzielt werden, so dass ein präziserer Produktvorschub als im Vergleich zu einem reinen Vorschub durch eine untere Produktauflage gewährleistet werden kann. Die obere Produktführung, insbesondere die Traktionsrolle, kann aktiv von oben auf das Lebensmittelprodukt gedrückt werden. Insbesondere kann aktiv mit einem definierten Anpressdruck angedrückt werden. Das Lebensmittelprodukt kann zwischen oberer Produktführung und unterer Produktauflage eingespannt werden.

Die erste Achse und die zweite Achse können in Förderrichtung versetzt zueinander sein. Eine derartige Anordnung der ersten und zweiten Achse kann die Anpassung an unterschiedliche Produkthöhen ermöglichen. Die Produktführung, insbesondere der Träger, kann in Form einer Schwinge oder eines schwenkbaren Arms angeordnet sein. Ebenso kann der Anpressdruck eingestellt werden.

Die erste Achse kann in einer stromaufwärtigen Hälfte des Trägers und die zweite Achse in einer stromabwärtigen Hälfte des Trägers sein. So kann der Lebensmittelriegel in bzw. unter die Produktführung gefahren werden, wobei die Traktionsrolle eine anfängliche Position wenigstens teilweise unterhalb der Höhe des Lebensmittelriegels haben kann, und durch Anlage mit dem Lebensmittelriegel, welcher einen etwas kleineren Querschnitt oder eine Kuppe am vorderen Ende aufweisen kann, automatisch nach oben schwenken kann. Es kann auch eine nach unten gerichtete Vorspannung der Produktführung eingestellt sein. Dazu kann eine entsprechende Federung an dem Träger angeordnet sein. Alternativ oder zusätzlich kann ein aktiver Anpressmechanismus, beispielsweise mittels Pneumatik, vorgesehen sein.

Die Produktführung kann Teil einer Zuführungseinrichtung mit Zuordnung zu einer unteren Produktauflage sein. Die Vorschubgeschwindigkeit der oberen Produktführung und der unteren Produktauflage können aufeinander abgestimmt, insbesondere synchronisiert, sein. Eine Höheneinstellung für die obere Produktführung und/oder untere Produktauflage kann jeweils vorgesehen sein. Damit kann eine Einstellung bzw. Anpassung bezüglich der Höhe des Lebensmittelprodukts sowie der für eine gute Traktion erforderlichen Vorspannung erfolgen. Zusätzlich oder alternativ kann durch die Höheneinstellung eine Ausrichtung des Lebensmittelprodukts auf eine Schneidkante der Aufschneideeinheit erfolgen.

Das Antriebsmittel kann ein umlaufendes Antriebsmittel sein. Somit kann mittels eines einfachen und stabilen Aufbaus eine Kraft zur Drehung der Traktionsrolle auf diese übertragen werden, wobei die Kraft ausreichend groß sein kann, um Lebensmittelprodukte auch mit größerer Dichte oder Gewicht präzise der Aufschneideeinheit zuzuführen. Der Antrieb mittels umlaufendem Antriebsmittel kann verschleißarm sein.

Das Antriebsmittel kann ein umlaufender Antriebsriemen sein. Der umlaufende Antriebsriemen kann ein Zahnriemen sein. Damit kann eine präzise Drehung der Traktionsrolle und somit ein präziser Vorschub des Lebensmittelprodukts erreicht werden. Der Zahnriemen kann mit entsprechenden an der Traktionsrolle angeordneten Zähnen in Eingriff kommen. Eine Kraftübertragung mittels Antriebsriemen, insbesondere Zahnriemen, kann einen wartungsarmen, präzisen und stabilen Antrieb darstellen.

Die Traktionsrolle kann über das umlaufende Antriebsmittel mit einer Antriebswelle verbunden sein, um von der Antriebswelle angetrieben zu werden.

Die Antriebswelle kann von der Traktionsrolle beabstandet sein. Ein mit der Antriebswelle verbundener Antriebsmotor und gegebenenfalls ein Getriebe kann von der Traktionsrolle beabstandet angeordnet sein. So können Antriebswelle, Antriebsmotor und Getriebe weiter von einer Schneidebene der Aufschneideeinheit entfernt als die Traktionsrolle angeordnet sein, bzw. kann die Traktionsrolle näher an der Schneidebene positioniert werden. Die Antriebswelle kann separat des schwenkbaren Trägers in der Lebensmittelaufschneidemaschine, insbesondere ausgehend von einem Gehäuse der Lebensmittelaufschneidemaschine, angeordnet sein.

Die Antriebswelle kann in Förderrichtung versetzt zu der Traktionsrolle angeordnet sein. Insbesondere kann die Antriebswelle stromaufwärts der Traktionsrolle und damit weiter von der Aufschneideeinheit entfernt als die Traktionsrolle angeordnet sein.

Vorzugsweise ist eine Antriebsrolle an dem Träger angeordnet, und ein erstes Antriebsmittel läuft um die Traktionsrolle und die Antriebsrolle um, und ein zweites Antriebsmittel läuft um die Antriebsrolle und eine Antriebswelle um. So kann das erste Antriebsmittel individuell an die Trägergeometrie und die Anordnung der Traktionsrolle angepasst werden, wohingegen das zweite Antriebsmittel in einer Standardgröße vorgesehen sein kann. So kann die Produktführung mit reduziertem Änderungsaufwand an unterschiedliche Lebensmittelprodukte angepasst werden. Zudem ist die Traktionsrolle von der Antriebswelle entkoppelt und die Antriebsmittel können weniger Verschleiß erfahren und der Antrieb eine verbesserte Stabilität aufweisen. Zudem kann sich eine Längung bei zwei kürzeren Antriebsriemen weniger stark auswirken als bei einem einzigen, langen Antriebsriemen. Außerdem kann die Reinigung vereinfacht sein, da nur das erste, um die Traktionsrolle umlaufende Antriebsmittel in die Nähe des Lebensmittelprodukts kommt.

Die Antriebsrolle kann zwei im Wesentlichen separate Rollen aufweisen, welche mittels einer starren Achse verbunden sind. Das erste und das zweite Antriebsmittel kann jeweils über eine dieser Rollen umlaufen. Die Rollen können jeweils so ausgestattet sein, beispielsweise mittels seitlichen Erhöhungen bzw. Bordscheiben, dass ein laterales Verschieben der Antriebsmittel verhindert wird. So können die Antriebsmittel stabil und voneinander beabstandet umlaufen.

Die zwei separaten Rollen der Antriebsrolle können einen unterschiedlichen Durchmesser aufweisen. So kann ein Übersetzungsverhältnis zwischen dem ersten und dem zweiten Antriebsmittel definiert werden.

Das Antriebsmittel kann eine an der Traktionsrolle koaxial angeordnete Antriebswelle sein. Somit besteht kein Bedarf die Traktionsrolle mit einem umlaufenden Antriebsmittel, wie einem Antriebsriemen, anzutreiben.

Die Kraftübertragung auf die Traktionsrolle und damit der Antrieb kann mittels einer Kardanwelle, oder einer Gelenkwelle, oder zwei Kegelradsätzen, oder Kombinationen davon erfolgen.

Die Traktionsrolle kann koaxial mit einem Antriebsmotor oder einem Motorgetriebe verbunden sein, um von diesem angetrieben zu werden. Es kann zwischen Antriebsmotor und Traktionsrolle bzw. zwischen Motorgetriebe und Traktionsrolle eine Antriebswelle angeordnet sein.

Ein Antriebsmotor kann direkt in der Traktionsrolle angeordnet sein, um die Traktionsrolle anzutreiben. In der Traktionsrolle kann ein Trommelmotor integriert sein. So kann eine besonders kompakte Produktführung realisiert werden.

Die Traktionsrolle kann an dem Träger beweglich gelagert sein. Die Traktionsrolle kann an dem Träger drehbar gelagert sein.

Die Traktionsrolle kann zwischen zwei Seitenstreben des Trägers gelagert sein. Der Abstand der Seitenstreben kann im Wesentlichen einer Förderspurbreite, insbesondere höchstens einer Förderspurbreite, entsprechen. Der Abstand der Seitenstreben kann im Wesentlichen einer Produktbreite, insbesondere höchstens einer Produktbreite, entsprechen. Die Breite über alle Komponenten einer Produktführung kann im Wesentlichen einer Förderspurbreite oder Produktbreite, insbesondere höchstens einer Förderspurbreite oder Produktbreite, entsprechen. Es können alle Bauelemente einer Produktführung, insbesondere eines Trägers, innerhalb einer Förderspur angeordnet sein. Es können mehrere Produktführungen, bevorzugt zwei, innerhalb einer Förderspur angeordnet sein, insbesondere um auf besonders breite Produkte Einfluss zu nehmen. Diese Produktführungen können synchron oder unabhängig auf ein Produkt einwirken.

Vorzugsweise umfasst die Traktionsrolle einen ersten Umfangsbereich und einen zweiten Umfangsbereich, wobei das Antriebsmittel um den zweiten Umfangsbereich umläuft, wobei der Durchmesser des zweiten Umfangsbereichs und des aufliegenden Antriebsmittels geringer ist als der Durchmesser des ersten Umfangsbereichs. So kann ein kompakter Aufbau und Antrieb der Traktionsrolle erreicht werden. Zudem kann vermieden werden, dass ein Lebensmittelprodukt mit dem Antriebsmittel in Kontakt kommt, da das Lebensmittelprodukt nur in Kontakt mit dem ersten Umfangsbereich kommt, welcher den größten Umfang der Traktionsrolle, also den größten Außendurchmesser bzw., bei leicht in das Lebensmittelprodukt eindringenden oder nachgiebigen Traktionsrollen, den auf das Lebensmittelprodukt wirksamen Durchmesser bzw. Wirkdurchmesser, aufweist. So können auch Verunreinigungen des Antriebsmittels und Störungen des Vorschubs des Lebensmittelprodukts vermieden werden.

Der zweite, durchmesserkleinere Umfangsbereich kann an einem seitlichen Ende der Traktionsrolle angeordnet sein. Der zweite Umfangsbereich kann an einem in Förderrichtung gesehen linken oder rechten seitlichen Ende der Traktionsrolle angeordnet sein.

Der zweite Umfangsbereich kann an einem seitlichen Ende der Traktionsrolle auf einer Bedienseite der Produktführung angeordnet sein. So ist das Antriebsmittel einfach zugänglich und kann für eine Reinigung besonders einfach entnommen werden.

Der zweite Umfangsbereich kann zwischen einem jeweils seitlich, in einer Förderrichtung gesehen links und rechts, angeordneten ersten Umfangsbereich vorgesehen sein. So kann eine zentrale, achssymmetrische Kraftübertragung möglich sein, wodurch eine einseitige Belastung des Lagers der Traktionsrolle vermieden werden kann.

Bevorzugt weist die Traktionsrolle an ihrem äußeren Umfang eine Oberflächenstruktur mit einer Höhe von weniger als ca. 3 Millimeter bis 4 Millimeter, bevorzugt weniger als ca. 2 Millimeter auf. Dies kann einen zumindest teilweise formschlüssigen Eingriff mit dem Material des Lebensmittelprodukts, also eine Verformung desselben, ermöglichen. So kann eine Kraft zum Bewegen des Lebensmittelprodukts vorteilhafter auf dieses übertragen werden. Es kann andererseits eine Beschädigung des Lebensmittelprodukts durch zu weit hervorstehende Oberflächenstrukturen vermieden werden. Insbesondere kann ein Aufreißen der Oberfläche des Lebensmittelprodukts vermieden werden, was besonders bei weicheren Lebensmittelprodukten relevant ist.

Die Traktionsrolle kann eine Querrillung aufweisen. Deren Querrillen können beispielsweise rechteckig oder spitz zulaufende Erhöhungen, also Außenkanten, sein, welche sich quer zur Förderrichtung entlang der Traktionsrolle erstrecken. Die Querrillung kann eine entsprechende Verformung der Oberfläche des Lebensmittelprodukts hervorrufen, so das zusätzlich zu einem kraftschlüssigen Vortrieb des Lebensmittelprodukts eine formschlüssige Komponente hinzukommen kann.

Die Traktionsrolle kann Noppen aufweisen. Dadurch kann ein weiter erhöhter Eingriff der Traktionsrolle in das Material des Lebensmittelprodukts erfolgen und eine formschlüssige Komponente der Kraftübertragung erhöht werden.

Die Traktionsrolle kann eine Wellenform oder Beulenform auf ihrer Oberfläche aufweisen. Diese können ein nur leichtes und damit schonendes Eindrücken in die Oberfläche des Lebensmittelprodukts gewährleisten.

Die Traktionsrolle kann Dornen aufweisen. Dornen können hervorstehende Strukturen ähnlich Noppen sein, welche jedoch spitz zulaufen. So kann ein Vorschub von schweren und festen Lebensmittelprodukten, insbesondere mit hoher Dichte, stabil bewerkstelligt werden. Die Dornen können in Förderrichtung geneigt sein. Die Dornen können so angeordnet bzw. geneigt sein, dass sie an der Seite der Traktionsrolle, welche mit dem Lebensmittelprodukt gerade in Kontakt ist, in Förderrichtung geneigt sind. So kann die Kraftübertragung in das Lebensmittelprodukt weiter erhöht werden.

Der äußere Umfang der Traktionsrolle kann Edelstahl, insbesondere rostfreien Edelstahl, umfassen. Somit ist die Traktionsrolle für den Einsatz im Lebensmittelbereich geeignet und gut zu reinigen. Zudem kann Edelstahl die Langlebigkeit aufgrund geringen Verschleißes erhöhen.

Der äußere Umfang der Traktionsrolle kann ein Elastomer umfassen. So kann der Transport des Lebensmittelprodukts für dieses schonend erfolgen. Zudem kann ein Elastomer gewählt werden, welches einen erhöhten Haftreibungskoeffizient aufweist, wodurch die Kraftübertragung verbessert wird.

Der äußere Umfang der Traktionsrolle oder die gesamte Rolle kann einen Kunststoff, insbesondere mit Lebensmittelzulassung, umfassen. Dieser kann gut reinigbar sein und kann eine vorteilhafte Haftreibung und/oder Elastizität aufweisen.

Vorzugsweise ist eine zweite Traktionsrolle um eine dritte Achse rotierbar an dem Träger angeordnet, wobei die dritte Achse parallel und in Förderrichtung beabstandet zu der zweiten Achse der ersten Traktionsrolle angeordnet ist. Die erste und die zweite Traktionsrolle können zum Vorschub des Lebensmittelprodukts beitragen. Damit kann eine erhöhte Kraftübertragung auf das Lebensmittelprodukt möglich sein. Durch die erhöhte Kraftübertragung und die größere Kontaktfläche kann ein besonders präziser und stabiler Vorschub des Lebensmittelprodukts gewährleistet sein. Die erste und die zweite Traktionsrolle können entlang der Förderrichtung nacheinander angeordnet sein. Die erste und die zweite Traktionsrolle können im Abstand von wenigen Millimetern oder wenigen Zentimetern zueinander angeordnet sein. Die erste und zweite Traktionsrolle können weiter voneinander beabstandet, beispielsweise im Abstand von 10 Zentimetern bis 20 Zentimetern angeordnet sein. Die erste und die zweite Traktionsrolle können in einer stromabwärtigen Hälfte, insbesondere an einer stromabwärtigen Seite, der Produktführung angeordnet sein. Die erste Traktionsrolle kann in einer stromabwärtigen Hälfte, insbesondere an einer stromabwärtigen Seite, der Produktführung angeordnet sein und die zweite Traktionsrolle kann mittig oder in einer stromaufwärtigen Hälfte der Produktführung angeordnet sein.

Vorzugsweise ist das erste Antriebsmittel angeordnet, um die erste und die zweite Traktionsrolle anzutreiben. Somit können sich die Traktionsrollen synchron bewegen und es kann eine einzige Antriebswelle für den Antrieb beider Traktionsrollen ausreichend sein. Der Materialaufwand und der Platzbedarf können reduziert sein. Der Aufwand für eine Reinigung kann reduziert sein, da lediglich das eine Antriebsmittel entnommen werden muss, sofern dieses einer Reinigung bedarf.

Die erste und die zweite Traktionsrolle können als Teil einer Wippe oder eines Pendels angeordnet sein. Die Traktionsrollen können ausgelegt sein, einem Konturverlauf des Lebensmittelprodukts zu folgen. So kann ein verbesserter Kontakt zur Oberfläche des Lebensmittelprodukts ermöglicht sein.

Die Wippe kann eine Drehachse aufweisen, welche in Förderrichtung zwischen der ersten und der zweiten Traktionsrolle, insbesondere zwischen der ersten und der zweiten Traktionsrolle und höhenversetzt, angeordnet ist.

Die Antriebsrolle kann konzentrisch um die Drehachse der Wippe angeordnet sein und ein umlaufendes Antriebsmittel kann um die Antriebsrolle und die erste und zweite Traktionsrolle umlaufen, um die erste und zweite Traktionsrolle anzutreiben. So bleibt der Abstand zwischen jeweils der ersten Traktionsrolle bzw. der zweiten Traktionsrolle und der Antriebsrolle auch bei einem Drehen bzw. Schwenken der Wippe oder des Pendels konstant.

Der Träger kann eine oder mehrere Spannrollen umfassen, welche das oder die umlaufenden Antriebsmittel spannt. Die Spannrolle kann starr in Form einer Umlenkrolle an dem Träger angeordnet sein. Die Spannrolle kann das umlaufende Antriebsmittel unter Vorspannung halten. Die Spannrolle kann beweglich angeordnet sein, beispielsweise mittels eines Federmechanismus. So kann eine Längung des Antriebsmittels ausgeglichen werden.

Vorzugsweise umfasst der Träger eine erste und eine zweite Traktionsrolle und eine Spannrolle, wobei die Spannrolle im Wesentlichen zwischen der ersten und der zweiten Traktionsrolle angeordnet ist. Die Spannrolle kann dazu beitragen, dass das umlaufende Antriebsmittel mit ausreichender Spannung mit den Traktionsrollen in Eingriff ist.

Das erste umlaufende Antriebsmittel kann zwischen der ersten und der zweiten Traktionsrolle um die Spannrolle umlaufen. Das umlaufende Antriebsmittel kann um die erste Traktionsrolle, dann um die Spannrolle und anschließend um die zweite Traktionsrolle umlaufen. Das umlaufende Antriebsmittel kann dabei mittels einer ersten Seite mit der ersten und der zweiten Traktionsrolle in Eingriff kommen und mit einer zweiten Seite mit der Spannrolle in Eingriff kommen.

Die Spannrolle kann bezüglich der ersten und der zweiten Traktionsrolle höhenversetzt angeordnet sein. So kann eine Spannung des Antriebsmittels erreicht werden, wobei gleichzeitig die erste und die zweite Traktionsrolle und die Spannrolle platzsparend angeordnet sind.

Der Träger kann eine erste und eine zweite Traktionsrolle und drei Spannrollen aufweisen, die so angeordnet sind, dass das Antriebsmittel abwechselnd um eine Spannrolle und eine Traktionsrolle umläuft. So kann das umlaufende Antriebsmittel jeweils beidseitig von jeder der beiden Traktionsrollen auf Spannung gegen die jeweilige Traktionsrolle gehalten werden. Die drei Spannrollen können höhenversetzt zu den Drehachsen der Traktionsrollen angeordnet sein.

Es können eine oder mehrere freilaufende Andrückrollen an dem Träger angeordnet sein. Diese können mit Anpressdruck mit dem Lebensmittelprodukt in Anlage gebracht werden. Der Kontakt der Andrückrollen mit dem Lebensmittelprodukt kann gleichzeitig oder zeitlich unterschiedlich zu dem Kontakt der Traktionsrollen mit dem Lebensmittelprodukt erfolgen. Letzteres kann beispielsweise während dem Annähern der Produktführung bzw. des Trägers an das Lebensmittelprodukt erfolgen. Die eine oder mehreren Andrückrollen können die Vorschubbewegung des Lebensmittelprodukts zusätzlich zu den Traktionsrollen stabilisieren.

Vorzugsweise sind eine oder mehrere freilaufende Andrückrollen stromabwärts der Traktionsrolle angeordnet. Vorzugsweise sind eine oder mehrere freilaufende Andrückrollen in Förderrichtung stromabwärts der Traktionsrolle angeordnet. Die Andrückrolle kann von der Traktionsrolle in Richtung zu einer Schneidebene der Aufschneideeinheit hin versetzt angeordnet sein. Die Andrückrolle kann näher als die Traktionsrolle an der Schneidebene der Aufschneideeinheit positioniert sein. Die Andrückrolle kann einen kleineren Durchmesser als die Traktionsrolle aufweisen, und so näher an der Schneidebene der Aufschneideeinheit positioniert sein. Die eine oder mehreren freilaufenden Andrückrollen können an einem von einer Aufhängung des Trägers entfernten Ende des Trägers angeordnet sein.

Vorzugsweise ist eine freilaufende Andrückrolle federnd gelagert, um elastisch gegen ein Lebensmittelprodukt anpressbar zu sein. Vorzugsweise ist eine freilaufende Andrückrolle stromabwärts der Traktionsrolle angeordnet und federnd gelagert, um elastisch gegen ein Lebensmittelprodukt anpressbar zu sein. So kann ein zu starker Anpressdruck vermieden werden.

Eine freilaufende Andrückrolle kann stromabwärts der Traktionsrolle mittels eines Hebelarms federnd gelagert sein. Die freilaufende federnd gelagerte Andrückrolle kann an einem stromabwärtigen Ende des Trägers angeordnet sein. Aufgrund des Hebelarms kann der Federmechanismus stromaufwärts der Andrückrolle vorgesehen sein, sodass die Andrückrolle möglichst nahe an eine Schneidebene herangerückt werden kann, ohne dass der Federmechanismus die Positionierung der Andrückrolle behindert. Insbesondere kann der Raum oberhalb der Andrückrolle aufgrund des Hebelarms frei bleiben.

Der Hebelarm kann um die zweite Achse drehbar oder schwenkbar gelagert sein. Somit muss keine weitere Drehachse bzw. Lager vorgesehen sein. Die Andrückrolle kann stromabwärts und der Federmechanismus stromaufwärts der Traktionsrolle vorgesehen sein. Somit kann der vorhandene Platz an dem Träger bzw. in der Produktführung vorteilhaft ausgenutzt werden.

Der Hebelarm kann im Wesentlichen longitudinal ausgerichtet sein. So kann der Träger und die Produktführung, insbesondere im vorderen Bereich, weiterhin flach ausgebildet sein.

Eine oder mehrere freilaufende Andrückrollen können stromaufwärts der Traktionsrolle, insbesondere zu einer Produktzuführungsseite oder Produktbeladeseite hin, angeordnet sein. So können zusätzliche Anpressunkte geschaffen werden, wodurch die Stabilität des Vorschubs weiter verbessert werden kann.

Jeweils wenigstens eine freilaufende Andrückrolle kann stromabwärts und eine Andrückrolle stromaufwärts der Traktionsrolle angeordnet sein.

Vorzugsweise sind eine oder mehrere freilaufende Andrückrollen an einer gemeinsamen Drehachse pendelbar an dem Träger angeordnet. So kann der Kontur des Lebensmittelprodukts gefolgt werden, undso kann ein stabiler Kontakt der Andrückrolle mit dem Lebensmittelprodukt verbessert aufrechterhalten werden.

Vorzugsweise ist jeweils eine Andrückrolle stromabwärts und eine Andrückrolle stromaufwärts der Traktionsrolle an einer um die zweite Achse drehbaren Wippe angeordnet. Vorzugsweise ist jeweils eine Andrückrolle in Förderrichtung vor der Traktionsrolle und eine Andrückrolle nach der Traktionsrolle an einer um die zweite Achse drehbaren Wippe angeordnet. Vorzugsweise ist jeweils eine Andrückrolle stromabwärts und eine Andrückrolle stromaufwärts der Traktionsrolle an einer um die zweite Achse drehbaren Wippe angeordnet und der Traktionsrolle zugeordnet. So kann der Kontur des Lebensmittelprodukts mittels der Wippe gefolgt werden. Sind zwei oder mehrere Traktionsrollen vorhanden, so kann an einer Traktionsrolle, an mehreren oder an allen Traktionsrollen jeweils eine entsprechende Wippe vorhanden bzw. der jeweiligen Traktionsrolle zugeordnet sein. Die Wippe kann einen oder zwei seitliche Streben aufweisen, an welchen die Andrückrollen gelagert sind, und die Streben wiederum auf der Achse der Traktionsrolle gelagert.

Es kann jeweils in einer ersten Anschlagstellung und einer zweiten Anschlagstellung der Wippe jeweils eine der Andrückrollen so von der Förderrichtung weggeschwenkt sein, dass die jeweilige Andrückrolle nicht mit einem geförderten Lebensmittelprodukt in Kontakt kommt.

Das umlaufende Antriebsmittel kann so über eine Spannrolle und die Traktionsrolle geführt sein, dass es außerhalb des Bewegungsbereichs der Wippe verläuft.

Der Träger kann ein Auflageelement aufweisen, welches konfiguriert ist, in Gleitkontakt mit dem Lebensmittelprodukt in Anlage zu kommen. Somit kann mit konstruktiv besonders einfachen Mitteln ein zusätzliches Element zur Produktführung bereitgestellt werden.

Das Auflageelement kann schwenkbar an einer Drehachse an dem Träger angeordnet sein. So kann es der Kontur des Lebensmittelprodukts folgen.

Der Träger kann ein Bodenelement, insbesondere Bodenblech, aufweisen, wobei das Bodenelement wenigstens eine Ausnehmung aufweist, durch welche jeweils eine oder mehrere Traktionsrollen wenigstens teilweise hindurchtreten. So kann der übrige Bereich des Trägers, welcher durch das Bodenelement von unten abgedeckt ist, vor Verschmutzung geschützt sein. Das Bodenelement kann als Auflageelement dienen.

Der Träger kann an einer lateral linken Seite oder lateral rechten Seite oder an beiden Seiten ein flächiges Seitenelement, insbesondere Seitenblech, aufweisen. Das Seitenelement kann die innen gelegenen Elemente des Trägers bzw. der Produktführung vor Verschmutzung schützen. Die Seitenelemente können zur Lagerung der Rollen dienen. Die Seitenelemente können dem Träger Stabilität verleihen.

Der Träger kann einen mit einer Spannrolle verbundenen Federspanner umfassen, welcher dazu konfiguriert ist, ein umlaufendes Antriebsmittel zu spannen. Die Spannrolle kann dazu beweglich, insbesondere verschiebbar, gelagert sein. Der Federspanner kann die Spannrolle mit konstanter Kraft gegen das umlaufende Antriebsmittel drücken, sodass dieses auf konstanter Spannung gehalten wird. Insbesondere kann so eine Längung des Antriebsmittels, also eine Längenausdehnung, ausgeglichen werden.

Der Federspanner kann angeordnet sein, ein umlaufendes Antriebsmittel, welches über eine Antriebswelle umläuft, zu spannen. So kann eine zuverlässige Kraftübertragung auf die Traktionsrolle gewährleistet sein.

Der Träger kann einen mit einer Spannrolle verbundenen Pneumatikspanner umfassen, welcher dazu konfiguriert ist, ein umlaufendes Antriebsmittel zu spannen. Der Pneumatikspanner kann eingerichtet sein, einen definierten Druck aufzubauen bzw. aufrechtzuerhalten. Insbesondere können auch höhere Drücke und damit höhere Spannkräfte als beispielsweise mittels rein mechanischen Spannvorrichtungen realisiert werden. So kann das umlaufende Antriebsmittel besonders zuverlässig, auch mit höheren Spannkräften, gespannt werden. Eine Pneumatiksteuerung kann konfiguriert sein, die Spannkraft zu regeln oder anzupassen oder beides.

Der Pneumatikspanner kann angeordnet sein, ein umlaufendes Antriebsmittel, welches über eine Antriebswelle umläuft, zu spannen. So kann das umlaufende Antriebsmittel zuverlässig auf Spannung gehalten werden und der Antrieb der Traktionsrolle entsprechend zuverlässig erfolgen.

Der Pneumatikspanner kann eine zweite Spannrolle umfassen, welche koaxial um eine vierte Achse angeordnet ist, und wobei das umlaufende Antriebsmittel um die erste und die zweite Spannrolle umläuft und der Pneumatikspanner konfiguriert ist, mittels eines Pneumatikkolbens die erste Spannrolle um die vierte Achse zu schwenken, um das Antriebsmittel zu spannen oder zu entspannen. Dies kann das Aufziehen des Antriebsmittels auf die Rollen des Trägers vereinfachen, da das Antriebsmittel ohne Spannung über die Rollen gelegt werden kann, und anschließend die erste Spannrolle so geschwenkt werden kann, dass die gewünschte Spannung des Antriebsmittels erreicht wird. Ebenso kann beim Abnehmen des Antriebsmittels dieses vor dem Abziehen entspannt werden.

Die erste und die zweite Spannrolle des Pneumatikspanners können mittels eines Rahmenteils verbunden sein. Der Pneumatikkolben kann an dem Rahmenteil angelenkt sein. Der Pneumatikkolben kann zentriert angeordnet sein und ein Verwinden oder Verdrehen der ersten Spannrolle beim Bewegen derselben kann vermieden werden. Insbesondere kann der Pneumatikkolben mittels einer Querstrebe an dem Rahmenteil angelenkt sein.

Eine Strebe kann an der ersten Spannrolle angelenkt sein und die Strebe kann mittels einer Rolle verschiebbar in einem Seitenprofil gelagert sein. So ist die Schwenkbewegung geführt und kann dadurch zusätzlich stabilisiert sein.

Gemäß einem zweiten Aspekt bezieht sich die Erfindung auf eine Lebensmittelaufschneidemaschine umfassend eine Aufschneideeinheit und eine Produktführung nach einer der voranstehend beschriebenen Ausführungsformen und ein Halteelement, wobei der Träger lösbar und um die erste Achse schwenkbar an dem Haltelement angeordnet ist. Durch das Schwenken kann die Produktführung mit einstellbarem Druck mit dem Lebensmittelprodukt in Anlage gebracht werden. Das Halteelement kann als Lagerung dienen und die Schwenkachse darstellen bzw. aufweisen.

Das Halteelement kann eine transversal zur Förderrichtung verlaufende Strebe sein. So kann die Produktführung um die Strebe schwenken.

Der Träger kann auf das Halteelement aufsteckbar sein.

Der Träger kann auf das Halteelement aufschiebbar sein. Der Träger bzw. die Produktführung kann für Reinigungsarbeiten abgenommen werden. Insbesondere können zwei oder mehrere Produktführungen lösbar an dem Halteelement angeordnet werden. Es kann eine Produktführung pro Förderspur vorgesehen sein. Die Anzahl der Förderspuren der Lebensmittelaufschneidemaschine kann veränderbar sein. Es kann eine der Förderspuren entsprechende Anzahl an Produktführungen an dem Halteelement angeordnet werden. Die Lebensmittelaufschneidemaschine kann für die variable und wählbare Anzahl von ein bis vier Förderspuren ausgelegt sein.

Der Träger kann an dem Halteelement fixierbar, insbesondere verriegelbar, sein.

Die Lebensmittelaufschneidemaschine kann einen Pneumatikkolben zum Verschwenken des Trägers umfassen. Der Träger und damit die Traktionsrolle kann steuerbar und mit einem definierten Anpressdruck mit einem Lebensmittelprodukt in Anlage gebracht werden.

Die Produktführung kann eine obere Produktführung sein. Die Traktionsrolle kann von oben auf das Lebensmittelprodukt aufdrückbar sein.

Die Produktführung kann eine obere Produktführung sein und die Lebensmittelaufschneidemaschine kann des Weiteren eine untere Produktauflage umfassen. Die obere Produktführung und die untere Produktauflage können zusammenwirken, um das Lebensmittelprodukt der Aufschneideeinheit zuzuführen.

Die untere Produktauflage kann eine Gleitfläche, Förderfläche oder eine Auflagerolle oder eine Rollenbahn oder eine angetriebene Traktionsrolle oder einen Bandförderer oder Kombinationen davon umfassen. Es können sowohl in der oberen Produktführung als auch in der unteren Produktauflage aktive, den Vorschub erzeugende Elemente als auch passive Elemente, welche insbesondere der Führung oder Auflage dienen, vorgesehen sein.

Die Produktführung kann eine obere Produktführung sein und die Lebensmittelaufschneidemaschine kann des Weiteren eine untere Produktauflage umfassen, wobei eine Traktionsrolle der oberen Produktführung einer Traktionsrolle oder einer Auflagerolle der unteren Produktauflage zugeordnet sein kann. Insbesondere kann eine Traktionsrolle der oberen Produktführung einer Traktionsrolle oder einer Auflagerolle der unteren Produktauflage im Wesentlichen senkrecht zur Förderrichtung gegenüberstehen.

Es können zwei obere Traktionsrollen einer unteren Auflagerolle oder Traktionsrolle im Wesentlichen senkrecht zur Förderrichtung und mittig gegenüberstehen. Die obere Traktionsrolle kann der unteren Traktions- oder Auflagerolle auch leicht schräg gegenüberstehen. Das Lebensmittelprodukt kann zwischen den Rollen eingespannt bzw. auf dem Vorschubweg geführt werden.

Die obere Produktführung kann eine Traktionsrolle und eine Andrückrolle umfassen und die untere Produktauflage kann eine Traktionsrolle und eine Auflagerolle umfassen, und jeweils eine der oberen Traktionsrolle und Andrückrolle kann einer der unteren Traktionsrolle und Auflagerolle zugeordnet sein, insbesondere kann jeweils eine der oberen Traktionsrolle und Andrückrolle einer der unteren Traktionsrolle und Auflagerolle im Wesentlichen senkrecht zur Förderrichtung gegenüberstehen. So kann das Lebensmittelprodukt jeweils mit zwei Auflagepunkten oben und unten eingespannt werden. So kann ein besonders stabiler Vorschub erreicht werden und es kann eine vertikale Biegung des Lebensmittelprodukts vermieden werden.

Die obere Produktführung und die untere Produktauflage können jeweils zwei Traktionsrollen umfassen wobei jeweils eine der oberen Traktionsrollen einer der unteren Traktionsrollen im Wesentlichen senkrecht zur Förderrichtung gegenübersteht.

Es können zwei oder mehrere Produktführungen an dem Halteelement anordenbar sein. So können zwei oder mehrere Produktführungen für eine Förderspur vorgesehen sein, somit dann insbesondere für den Vorschub eines Lebensmittelprodukts. Insbesondere können zwei Produktführungen auf ein flaches Lebensmittelprodukt gemeinsam wirken, indem die zwei Produktführungen in einer Förderspur gemeinsam, insbesondere gleichlaufend, angeordnet und betrieben werden.

Die zwei oder mehreren Produktführungen können eine entsprechende Anzahl an Förderspuren bilden.

Die Anzahl der Förderspuren und damit die Anzahl an Produktführungen kann variabel sein. Die Lebensmittelmaschine kann ausgelegt sein, mit einer bis vier Förderspuren betrieben zu werden.

Gemäß einem dritten Aspekt bezieht sich die Erfindung auf eine Lebensmittelaufschneidemaschine umfassend eine Aufschneideeinheit, ein Halteelement und einen Träger, wobei der Träger lösbar und um eine erste Achse schwenkbar an dem Haltelement angeordnet ist, wobei eine Andrückrolle um eine zweite Achse drehbar an dem Träger angeordnet ist, wobei die erste Achse von der zweiten Achse beabstandet ist und die Andrückrolle ausgelegt ist, in Förderkontakt mit einem Lebensmittelprodukt zu kommen, wobei die zweite Achse der Andrückrolle weniger als 250 Millimeter zu einer Schneidebene der Aufschneideeinheit beabstandet ist.

Insbesondere kann die zweite Achse der Andrückrolle weniger als 200 Millimeter, insbesondere weniger als 100 Millimeter, insbesondere weniger als 50 Millimeter, zu der Schneidebene der Aufschneideeinheit beabstandet sein.

Es kann somit eine schwenkbare Produktführung realisiert sein, welche besonders nahe an der Schneidebene auf das Produkt drückt. Somit können die Vorteile einer nah an der Schneidebene platzierten Andrückrolle mit den Vorteilen der schwenkbaren Produktführung kombiniert werden, insbesondere der präzise Produktvorschub, die Anpassung an unterschiedliche Größen, Formen und Oberflächen eines Lebensmittelprodukts und das automatische Folgen der Kontur des Lebensmittelprodukts beim Einfahren des Lebensmittelprodukts unter die Andrückrolle.

Es können zwei oder mehrere Andrückrollen an dem Träger angeordnet sein. Die Andrückrollen können in Förderrichtung gesehen hintereinander, also entlang der Förderrichtung, angeordnet sein. Dabei beziehen sich die voran genannten Abstände auf die stromabwärtigste Andrückrolle, also die Andrückrolle, welche am nächsten zur Schneidebene angeordnet ist.

Die zwei oder mehreren Andrückrollen können als Teil eines Pendels oder einer Wippe gemeinsam schwenkbar an dem Träger angeordnet sein, wobei die Drehachse des Pendels oder der Wippe quer zu Förderrichtung orientiert ist. So kann der Kontur des Lebensmittelprodukts, insbesondere beim Einfahren unter die Produktführung, gefolgt werden.

Die stromaufwärtigste Andrückrolle kann vertikal nach oben versetzt angeordnet sein. So kann das Einfahren des Lebensmittelprodukts unter die Produktführung erleichtert werden. Die Produktführung kann durch das Lebensmittelprodukt angehoben werden, um sodann automatisch der oberen Kontur des Lebensmittelprodukts zu folgen.

Die zwei oder mehreren Andrückrollen können jeweils an einer Drehachse einzeln schwenkbar an dem Träger angeordnet sein. So können Unebenheiten ausgeglichen werden.

Gemäß einem vierten Aspekt bezieht sich die Erfindung auf eine Lebensmittelaufschneidemaschine umfassend eine Aufschneideeinheit, ein Halteelement und einen Träger, wobei der Träger lösbar und um eine erste Achse schwenkbar an dem Haltelement angeordnet ist, und wobei zwei oder mehrere Andrückrollen als Teil eines Pendels oder einer Wippe gemeinsam um eine zweite Achse schwenkbar an dem Träger angeordnet sind, wobei die zweite Achse von der ersten Achse beabstandet ist.

So kann der Kontur des Lebensmittelprodukts, insbesondere beim Einfahren unter die Produktführung, gefolgt werden.

Die Andrückrollen können ausgelegt sein, in Förderkontakt mit einem Lebensmittelprodukt zu kommen.

Alle dargestellten nicht angetriebenen, das Lebensmittelprodukt berührenden Rollen können auch alternativ als Gleitflächen ausgestaltet sein.

Im Folgenden werden Ausführungsbeispiele der Erfindung anhand der Figuren näher beschrieben. Dabei zeigen
Figur 1: eine Lebensmittelverarbeitungslinie,
Figur 2: eine perspektivische Ansicht einer Lebensmittelaufschneidemaschine mit einer Produktführung einer ersten Ausführungsform,
Figur 3: eine perspektivische Ansicht einer zweiten Ausführungsform einer Produktführung,
Figur 4: eine perspektivische Schnittansicht einer dritten Ausführungsform einer Produktführung,
Figur 5: eine perspektivische Schnittansicht einer vierten Ausführungsform einer Produktführung,
Figur 6: eine perspektivische Ansicht einer fünften Ausführungsform einer Produktführung,
Figur 7: eine perspektivische Ansicht einer sechsten Ausführungsform einer Produktführung,
Figur 8: eine schematische Ansicht einer Kombination aus oberer Produktführung und unterer Produktauflage.

Einander entsprechende Komponenten sind in den Figuren jeweils mit gleichen Bezugszeichen versehen.

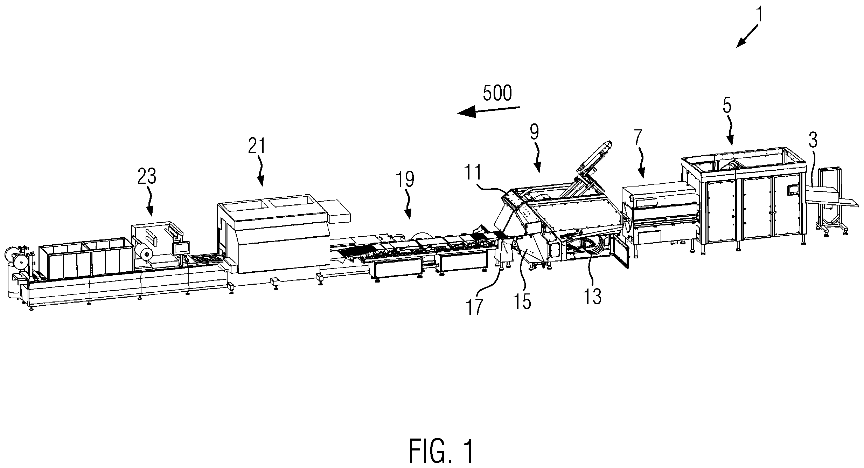

Figur 1 zeigt eine perspektivische Ansicht einer Lebensmittelverarbeitungslinie 1 mit mehreren Verarbeitungsstationen entlang einer Förderrichtung 500. Ein Lebensmittelblock 3, beispielsweise ein Käseblock, wird einem Blockteiler 5 zugeführt, um beispielsweise in vier längliche Lebensmittelprodukte geteilt zu werden, welche jeweils eine geringere Höhe und Breite als der ursprüngliche Lebensmittelblock 3 aufweisen. Die Lebensmittelprodukte werden anschließend in einem Scanner 7, beispielsweise einem Röntgenscanner, analysiert. So können beispielsweise die äußeren Abmessungen der Lebensmittelprodukte erfasst oder es kann ihre innere Dichtestruktur bestimmt werden oder beides. In der nachfolgenden Lebensmittelaufschneidemaschine 9 werden die Lebensmittelprodukte mittels einer Aufschneideeinheit 11 zu Lebensmittelscheiben aufgeschnitten. Dabei können mittels eines Trennblatteinlegers 13, auch "Interleaver" genannt, Trennblätter zwischen die Scheiben eingelegt werden. Eine Portioniereinheit 15, auf welche die abgeschnittenen Scheiben zunächst fallen, bestimmt durch die Bewegung ihrer Fördereinheit die Anordnung und Anzahl der Scheiben einer Lebensmittelportion. Eine Durchlauf-Kontrollwaage 17 überprüft das Portionsgewicht. Auf einem anschließenden Puffer 19 können eine gewünschte Anzahl von Lebensmittelportionen aufgereiht werden, um dann Portionsgruppen bzw. Formatsätze in den weiteren Stationen zu verarbeiten. In einer Beladestation 21 werden die Lebensmittelportionen beispielsweise mit einem Picker-Roboter oder einem Bandförderer in Verpackungsschalen eingelegt. In einer anschließenden Verpackungsmaschine 23 werden die mit Lebensmittelportionen befüllten Verpackungsschalen verschlossen, beispielsweise versiegelt. Die geschlossenen Verpackungen werden sodann etikettiert und vereinzelt.

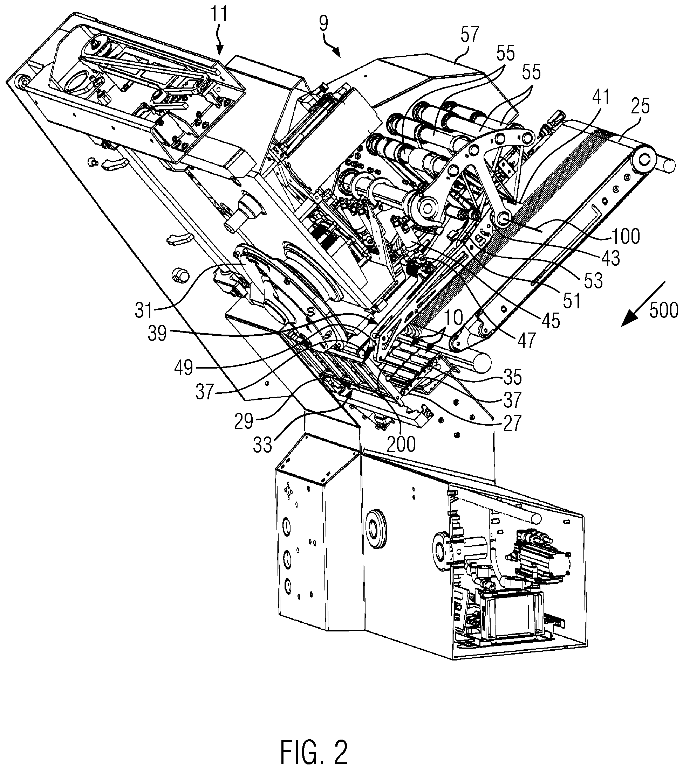

Figur 2 zeigt eine perspektivische Ansicht eines Ausschnitts der Lebensmittelaufschneidemaschine 9 mit Aufschneideeinheit 11. Ein Produktförderband 25 ist von einer unteren horizontalen Stellung in die gezeigte Schrägstellung schwenkbar und fördert ein Lebensmittelprodukt (nicht gezeigt) auf eine untere Produktfördervorrichtung 27 bzw. Produktauflage 27, welche das Lebensmittelprodukt wiederum der Aufschneideeinheit 11 zugeführt, wo es an einer Schneidkante 29 mittels eines rotierenden Messers (der Übersichtlichkeit halber nicht gezeigt) in Scheiben aufgeschnitten wird. Das Messer ist an einer Messerhalterung 31 austauschbar montiert und wird von dieser in Rotation versetzt. Die Schneide des Messers läuft unmittelbar vor der Schneidkante 29 um und definiert so eine Schneidebene 33. Die Produktauflage 27 umfasst in dieser Ausführungsform vier Förderspuren mit jeweils fünf Auflagerollen 35 und einer angetriebenen Traktionsrolle 37. Eine Produktführung 39 ist angeordnet, um von oben mit dem Lebensmittelprodukt in Anlage zu kommen und dazu beizutragen, dass Lebensmittelprodukt der Aufschneideeinheit 11 zuzuführen. Die Produktführung 39 weist einen Träger 41 auf, welcher um eine erste Achse 100 schwenkbar an einem Halteelement 43 in Form einer Querstrebe angeordnet ist. Die Produktführung 39 weist eine Traktionsrolle 37 auf, welche in Förderkontakt mit dem Lebensmittelprodukt kommt, indem die Produktführung 39 von oben auf das Lebensmittelprodukt gedrückt wird. Dazu ist ein Pneumatikzylinder 45 mittels eines Pneumatikkolbens 47 mit dem Träger 43 verbunden. Die Traktionsrolle 37 der Produktführung 39 ist um eine zweite Achse 200 drehbar, also rotierbar, gelagert. Zum Antrieb der Traktionsrolle 37 der Produktführung 39 läuft ein erstes Antriebsmittel 49 um einen Abschnitt der Traktionsrolle 37 und eine Antriebsrolle 51 um. Ein zweites Antriebsmittel 53 läuft um die Antriebsrolle 51 und eine Antriebswelle 55 um, um die Drehung der Antriebswelle 55 auf die Antriebsrolle 51 und damit auf die Traktionsrolle 37 zu übertragen. Die Antriebswelle 55 wird wiederum von einem Antriebsmotor angetrieben, welche hier nicht sichtbar unter der Abdeckung 57 verbaut ist. In dieser Ausführungsform der Lebensmittelaufschneidemaschine 9 sind für jede der vier Förderspuren 10 je eine Antriebswelle 55 vorhanden, welche jeweils einer Produktführung 39 zugeordnet sind. Die Produktführungen 39 sind hier beispielhaft in unterschiedlichen Varianten ausgeführt, wobei die erste, dem Betrachter zugewandte Produktführung 39 eine erfindungsgemäße Produktführung 39 einer ersten Ausführungsform ist.

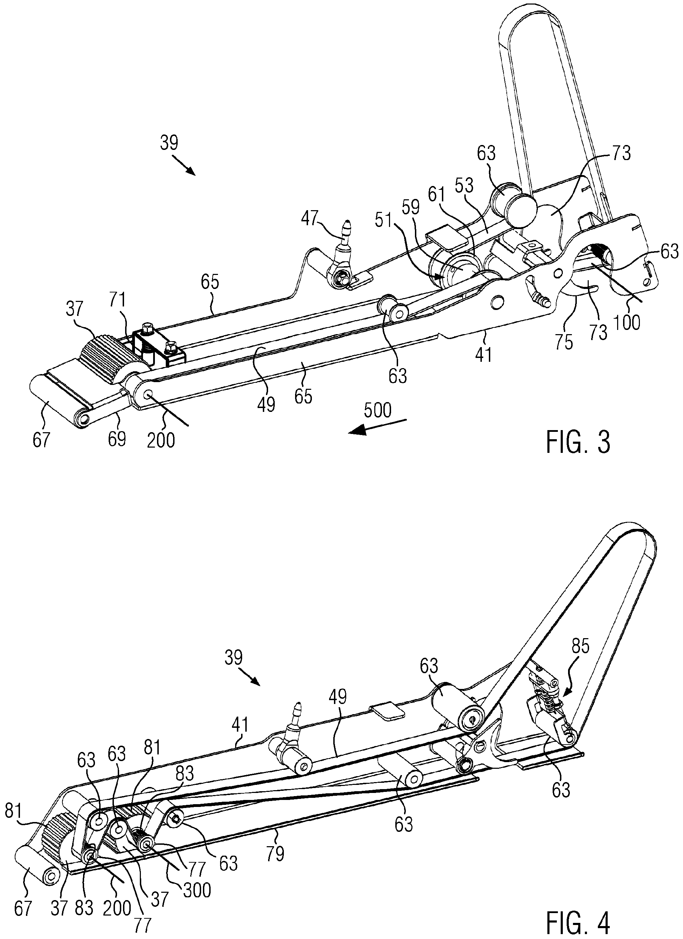

Figur 3 zeigt eine perspektivische Ansicht einer zweiten Ausführungsform einer Produktführung 39, welche leicht unterschiedlich zur ersten Ausführungsform von Figur 2 ist. Die Traktionsrolle 37 wird wieder von einem ersten Antriebsmittel 49 angetrieben, wobei das erste Antriebsmittel 49 um die Antriebsrolle 51 umläuft. Die Antriebsrolle 51 wird wiederum über das zweite Antriebsmittel 53 von einer Antriebswelle 55 (siehe Figur 2) angetrieben. Die Antriebsrolle 51 weist im Wesentlichen zwei separate Rollen auf, welche mittels einer starren Achse 59 verbunden sind. Die Antriebsmittel 49, 53 werden mittels seitlicher Scheibensegmente 61 auf der Antriebsrolle 51 geführt.

Mehrere Spannrollen 63 lenken die Antriebsmittel 49, 53 um, und halten diese auf Spannung. Die Traktionsrolle 37 ist zwischen zwei Seitenstreben 65 um die zweite Achse 200 drehbar gelagert. Die Traktionsrolle 37 weist eine Oberflächenstruktur in Form einer spitz zulaufenden, dreieckigen Querrillung auf. An dem äußersten stromabwärtigen Ende der Produktführung 39 ist eine freilaufende Andrückrolle 67 angeordnet, welche mittels eines Hebelarms 69 federnd gelagert ist. Der Hebelarm 69 ist um die zweite Achse 200 drehbar gelagert und mit einem Federelement 71 verbunden, welches die Vorspannung nach unten in Richtung des Lebensmittelprodukts erzeugt. Der Träger 41 weist in den Seitenstreben 65 jeweils eine Ausnehmung 73 auf, mit welcher der Träger 41 auf das Halteelement 43 (siehe Figur 2) aufschiebbar ist. Eine wegklappbare Verriegelung 75 dient zur Fixierung des Trägers 41 auf dem Halteelement 43.

Figur 4 zeigt eine perspektivische Schnittansicht einer dritten Ausführungsform einer Produktführung 39 mit zwei Traktionsrollen 37 und einer Andrückrolle 67. Die Traktionsrollen 37 treten teilweise durch Ausnehmungen 77 eines Bodenelements 79 des Trägers 41 hindurch, um so mit dem Lebensmittelprodukt in Kontakt zu kommen, wobei der Rest des Trägers 41 aufgrund des Bodenelements 79 vor Verschmutzung geschützt ist. Die Traktionsrollen 37 werden in dieser Ausführungsform durch ein einziges erstes Antriebsmittel 49 angetrieben, wobei das Antriebsmittel 49 direkt mit einer Antriebswelle 55 (dargestellt in Figur 2) der Lebensmittelaufschneidemaschine 9 verbunden ist. Die Traktionsrollen 37 sind um die zweite Achse 200 bzw. die dritte Achse 300 rotierbar an dem Träger 41 gelagert.

Das Antriebsmittel 49 läuft über mehrere Spannrollen 63 um, wobei eine Spannrolle 63 zwischen der ersten und zweiten Traktionsrolle 37 und leicht höhenversetzt angeordnet ist. So läuft das Antriebsmittel 49 abwechselnd um die Traktionsrollen 37 und die Spannrollen 63.

Die Traktionsrollen 37 weisen einen ersten Umfangsbereich 81 und einen zweiten Umfangsbereich 83 auf, wobei das Antriebsmittel 49 um den zweiten, durchmesserkleineren Umfangsbereich 83 umläuft. Der Durchmesser des zweiten Umfangsbereichs 83 inklusive des aufliegenden Antriebsmittels 49 ist dabei geringer als der Durchmesser des ersten Umfangsbereichs 81. Somit kommt das Lebensmittelprodukt nicht mit dem Antriebsmittel 49 in Berührung. Der zweite Umfangsbereich 83 ist an einem seitlichen Ende der Traktionsrolle 37 auf einer Bedienseite der Produktführung 39 angeordnet, d.h. auf der Seite der Lebensmittelaufschneidemaschine 9, von welcher die Produktführungen 39 von dem Halteelement 43 abgenommen werden können.

An dem stromaufwärtigen Ende der Produktführung 39 ist eine Spannrolle 63 an einem Federspanner 85 gelagert, um das Antriebsmittel 49 zu spannen.

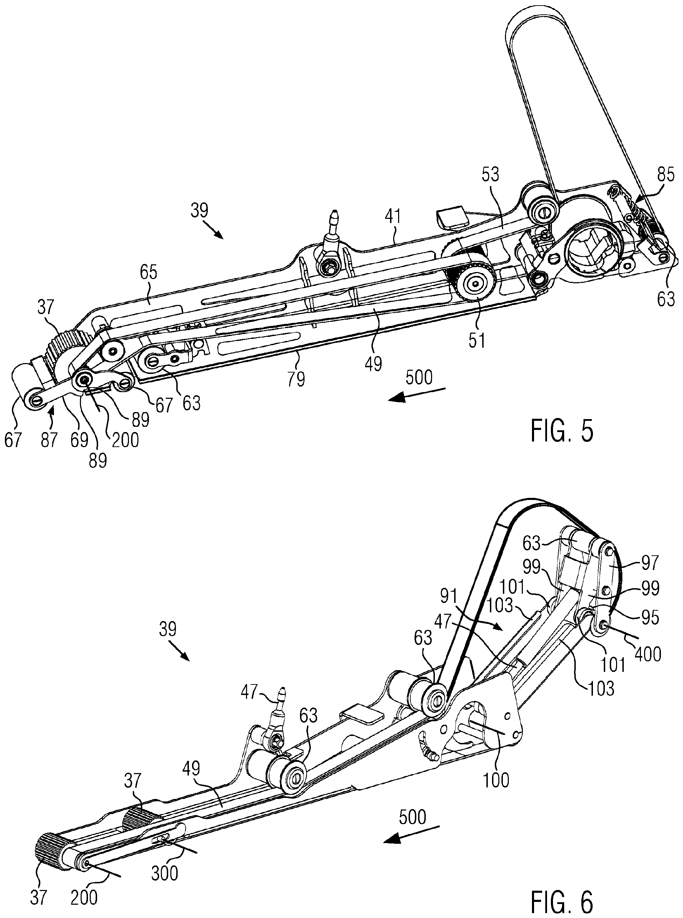

Figur 5 zeigt eine perspektivische Schnittansicht einer vierten Ausführungsform einer Produktführung 39 mit einer Traktionsrolle 37 und einem ersten Antriebsmittel 49 und einen zweiten Antriebsmittel 53, welche um die Antriebsrolle 51 umlaufen. Stromaufwärts und stromabwärts der Traktionsrolle 37 ist jeweils eine Andrückrolle 67 angeordnet, welche mittels des Hebelarms 69 verbunden sind, wobei der Hebelarm 69 um die zweite Achse 200 pendelbar bzw. drehbar gelagert ist, sodass die über den Hebelarm 69 verbundenen Andrückrollen 67 eine Wippe 87 bilden. Da es sich bei der Darstellung von Figur 5 um eine Schnittansicht handelt, ist nur die hintere Seitenstrebe 65 zu sehen, jedoch ist auch auf der dem Betrachter zugewandten Seite, also der in Förderrichtung 500 gesehen linken Seite, eine Seitenstrebe 65 als Teil des Trägers 41 vorhanden, an welcher insbesondere die Traktionsrolle 37 und die Antriebsrolle 51 gelagert ist. Für die Wippe 87 sind jeweils Anschlagelemente 89 vorgesehen, welche in dieser Ausführungsform mit dem Bodenelement 79 in Anlage kommen. Das Antriebsmittel 49 ist so geführt, dass es nicht mit der stromaufwärtigen Andrückrolle 67 in Kontakt kommt, sondern dass diese vorher mittels eines Anschlagelements 89 gestoppt ist.

Figur 6 zeigt eine perspektivische Ansicht einer fünften Ausführungsform einer Produktführung 39 mit zwei Traktionsrollen 37, welche über ein Antriebsmittel 49 angetrieben werden, wobei das Antriebsmittel 49 direkt mit einer Antriebswelle 55 (hier nicht gezeigt) verbunden ist. Die Produktführung 39 weist einen Pneumatikspanner 91 auf, welcher eine erste Spannrolle 63 und eine zweite Spannrolle 95 umfasst bzw. mit diesen verbunden ist, um das Antriebsmittel 49 zu spannen. Die zweite Spannrolle 95 ist koaxial um eine vierte Achse 400 rotierbar angeordnet. Der Pneumatikspanner 91 weist einen Pneumatikkolben 47 auf, welcher die erste Spannrolle 63 um die vierte Achse 400, nämlich die Drehachse der zweiten Spannrolle 95, dreht. Die erste Spannrolle 63 des Pneumatikspanners 91 wird um die zweite Spannrolle 95 in dieser Ansicht im Uhrzeigersinn gedreht, um das Antriebsmittel 49 zu spannen. Die erste Spannrolle 63 des Pneumatikspanners 91 wird um die zweite Spannrolle 95 gegen den Uhrzeigersinn gedreht, um das Antriebsmittel 49 zu entspannen. Die erste und die zweite Spannrolle 63, 95 des Pneumatikspanners 91 sind mittels eines Rahmenteils 97 verbunden. Eine Strebe 99 ist jeweils an der ersten Spannrolle 63 links und rechts des Pneumatikkolbens 47 angelenkt und die Streben 99 sind jeweils mittels einer Rolle 101 verschiebbar in einem Seitenprofil 103 gelagert ist. Beim Betätigen des Pneumatikkolbens 47 des Pneumatikspanners 91, also beim Verlängern oder Verkürzen der Kolben-Zylinder-Kombination wird die erste Spannrolle 63 um die zweite Spannrolle 95 geschwenkt und die Rollen 101 laufen in dem Seitenprofil 103, um die Bewegung zusätzlich zu führen. Entsprechend ändert sich dabei der Winkel zwischen Rahmenteil 97 und Strebe 99.

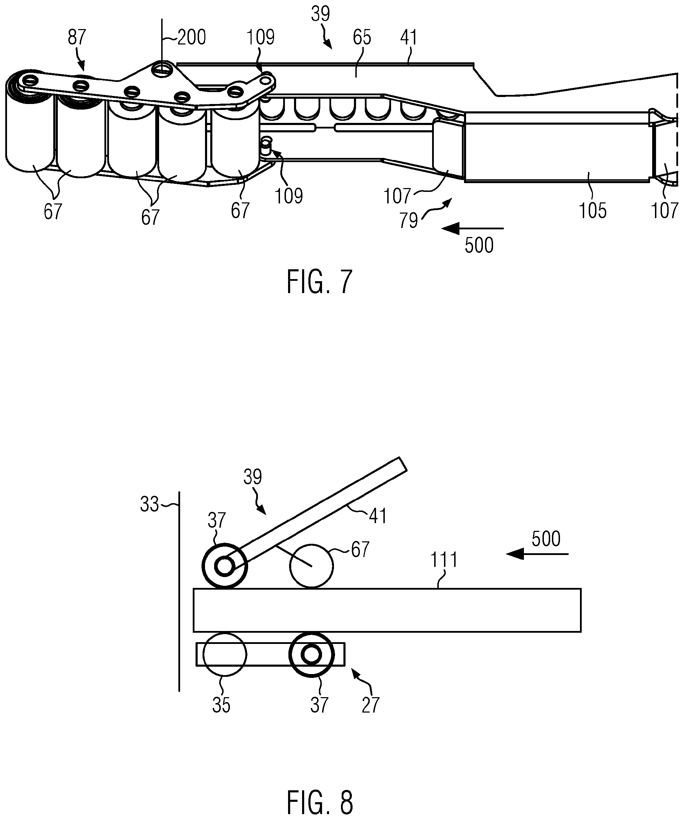

Figur 7 zeigt eine perspektivische Ansicht von schräg unten einer sechsten Ausführungsform einer Produktführung 39, bei welcher fünf freilaufende Andrückrollen 67 in einer Wippe 87 angeordnet sind, wobei die Wippe 87 um die zweite Achse 200 schwenkbar gelagert ist. Die stromaufwärtigste Andrückrolle 67 ist nach oben versetzt in der Wippe 87 angeordnet. So kann der Kontur des Lebensmittelprodukts, insbesondere beim Einlaufen unter die Produktführung 39, verbessert gefolgt werden. Der Träger 41 weist ein Auflageelement 105 als Teil des Bodenelements 79 auf, wobei das Auflageelement 105 in Gleitkontakt mit dem Lebensmittelprodukt kommen kann. Dazu weist das Auflageelement 105 zusätzlich zwei Schrägen 107 zum Aufgleiten auf das Lebensmittelprodukt auf. Eine Führung 109, bei welcher jeweils ein seitlicher Bolzen der Wippe 87 in eine Nut einer Seitenstrebe 65 des Trägers 41 eingreift, dient zur Führung und als Anschlag für das Schwenken der Wippe 87.

Figur 8 zeigt eine schematische Ansicht einer Kombination aus oberer Produktführung 39 und unterer Produktauflage 27 zwischen denen ein Lebensmittelprodukt 111 in Förderrichtung 500 zu einer Schneidebene 33 gefördert wird. Die untere Produktauflage 27 umfasst eine Auflagerolle 35 und eine Traktionsrolle 37. Die obere Produktführung 39 umfasst eine Traktionsrolle 37 und eine Andrückrolle 67, welche jeweils den Rollen 35, 37 der Produktauflage 27 zugeordnet sind. Insbesondere steht die Traktionsrolle 37 der oberen Produktführung 39 im Wesentlichen senkrecht zur Förderrichtung 500 der unteren Auflagerolle 35 gegenüber und die obere Andrückrolle 67 steht der unteren Traktionsrolle 37 im Wesentlichen senkrecht zur Förderrichtung 500 gegenüber. Die gedachte Verbindungslinie der Mittelpunkte der oberen Traktionsrolle 37 und der unteren Auflagerolle 35 bildet also einen rechten Winkel mit der Förderrichtung 500. Ebenso bildet die gedachte Verbindungslinie der Mittelpunkte der oberen Andrückrolle 67 und der unteren Traktionsrolle 37 einen rechten Winkel mit der Förderrichtung 500.

## Patentansprüche

1. Produktführung (39) zum Zuführen von Lebensmittelprodukten (111) zu einer Aufschneideeinheit (11) einer Lebensmittelaufschneidemaschine (9), umfassend eine Traktionsrolle (37), die ausgelegt ist in Förderkontakt mit einem Lebensmittelprodukt (111) zu kommen und dazu beizutragen das Lebensmittelprodukt (111) der Aufschneideeinheit (11) zuzuführen,
einen Träger (41), wobei der Träger (41) um eine erste Achse (100) schwenkbar anordenbar ist,
ein Antriebsmittel (49), wobei das Antriebsmittel (49) konfiguriert ist die Traktionsrolle (37) um eine zweite Achse (200) zu rotieren,
wobei die Traktionsrolle (37) an dem Träger (41) angeordnet ist und die erste Achse (100) von der zweiten Achse (200) beabstandet ist.

2. Produktführung nach Anspruch 1, wobei eine Antriebsrolle (51) an dem Träger (41) angeordnet ist, und ein erstes Antriebsmittel (49) um die Traktionsrolle (37) und die Antriebsrolle (51) umläuft und ein zweites Antriebsmittel (53) um die Antriebsrolle (51) und eine Antriebswelle (55) umläuft.

3. Produktführung nach einem der vorangegangenen Ansprüche, wobei die Traktionsrolle (37) einen ersten Umfangsbereich (81) und einen zweiten Umfangsbereich (83) umfasst, wobei das Antriebsmittel (49) um den zweiten Umfangsbereich (83) umläuft, wobei der Durchmesser des zweiten Umfangsbereichs (83) und des aufliegenden Antriebsmittels (49) geringer ist als der Durchmesser des ersten Umfangsbereichs (81).

4. Produktführung nach einem der vorangegangenen Ansprüche, wobei eine zweite Traktionsrolle (37) um eine dritte Achse (300) rotierbar an dem Träger angeordnet ist, wobei die dritte Achse (300) parallel und in Förderrichtung (500) beabstandet zu der zweiten Achse (200) der ersten Traktionsrolle (37) angeordnet ist.

5. Produktführung nach Anspruch 4, wobei das erste Antriebsmittel (49) angeordnet ist, um die erste und die zweite Traktionsrolle (37) anzutreiben.

6. Produktführung nach einem der vorangegangenen Ansprüche, wobei der Träger (41) eine erste und eine zweite Traktionsrolle (37) und eine Spannrolle (63) umfasst, wobei die Spannrolle (63) im Wesentlichen zwischen der ersten und der zweiten Traktionsrolle (37) angeordnet ist.

7. Produktführung nach einem der vorangegangenen Ansprüche, wobei eine oder mehrere freilaufende Andrückrollen (67) stromabwärts der Traktionsrolle (37) angeordnet sind.

8. Produktführung nach einem der vorangegangenen Ansprüche, wobei eine freilaufende Andrückrolle (67) federnd gelagert ist, um elastisch gegen ein Lebensmittelprodukt (111) anpressbar zu sein.

9. Produktführung nach einem der vorangegangenen Ansprüche, wobei eine oder mehrere freilaufende Andrückrollen (67) an einer gemeinsamen Drehachse pendelbar an dem Träger (41) angeordnet sind.

10. Produktführung nach einem der vorangegangenen Ansprüche, wobei jeweils eine Andrückrolle (67) stromabwärts und eine Andrückrolle (67) stromaufwärts der Traktionsrolle (37) an einer um die zweite Achse (200) drehbaren Wippe (87) angeordnet ist.

11. Produktführung nach einem der vorangegangenen Ansprüche, wobei der Träger (41) einen mit einer Spannrolle (63) verbundenen Pneumatikspanner (91) umfasst, welcher dazu konfiguriert ist, ein umlaufendes Antriebsmittel (49, 53) zu spannen.

12. Produktführung nach Anspruch 11, wobei der Pneumatikspanner (91) eine zweite Spannrolle (95) umfasst, welche koaxial um eine vierte Achse (400) angeordnet ist, und das umlaufende Antriebsmittel (49, 53) um die erste und die zweite Spannrolle (63, 95) umläuft und der Pneumatikspanner konfiguriert ist, mittels eines Pneumatikkolbens (47) die erste Spannrolle (63) um die vierte Achse (400) zu schwenken, um das Antriebsmittel (49, 53) zu spannen oder zu entspannen.

13. Lebensmittelaufschneidemaschine (9) umfassend eine Aufschneideeinheit (11) und eine Produktführung (39) nach einem der vorangegangenen Ansprüche und
ein Halteelement (43),
wobei der Träger (41) lösbar und um die erste Achse (100) schwenkbar an dem Haltelement (43) angeordnet ist.

14. Lebensmittelaufschneidemaschine nach Anspruch 13, wobei die Produktführung (39) eine obere Produktführung (39) ist und die Lebensmittelaufschneidemaschine (9) des Weiteren eine untere Produktauflage (27) umfasst, wobei eine Traktionsrolle (37) der oberen Produktführung (39) einer Traktionsrolle (37) oder einer Auflagerolle (35) der unteren Produktauflage (27) zugeordnet ist, insbesondere eine Traktionsrolle (37) der oberen Produktführung (39) einer Traktionsrolle (37) oder einer Auflagerolle (35) der unteren Produktauflage (27) im Wesentlichen senkrecht zur Förderrichtung (500) gegenübersteht.

15. Lebensmittelaufschneidemaschine nach Anspruch 13 oder 14, wobei die obere Produktführung (39) eine Traktionsrolle (37) und eine Andrückrolle (67) umfasst und die untere Produktauflage (27) eine Traktionsrolle (37) und eine Auflagerolle (35) umfasst, und jeweils eine der oberen Traktionsrolle (37) und Andrückrolle (67) einer der unteren Traktionsrolle (37) und Auflagerolle (35) zugeordnet ist, insbesondere im Wesentlichen senkrecht zur Förderrichtung (500) gegenübersteht.

## Claims

1. A product guide (39) for supplying food products (111) to a slicing unit (11) of a food slicing machine (9) comprising:
a traction roller (37) configured to come into conveying contact with a food product (111) for contributing to the supply of the food product (111) to the slicing unit (11),
a carrier (41), wherein the carrier (41) can be arranged pivotable around a first axis (100),
a drive means (49), wherein the drive means (49) is configured to rotate the traction roller (37) around a second axis (200),
wherein the traction roller (37) is disposed on the carrier (41) and the first axis (100) is spaced from the second axis (200).

2. The product guide according to claim 1, wherein a drive roller (51) is disposed at the carrier (41) and a first drive means (49) revolves about the traction roller (39) and the drive roller (51) and a second drive means (53) revolves about the drive roller (51) and a drive shaft (55).

3. The product guide according to any one of the preceding claims, wherein the traction roller (37) comprises a first circumferential region (81) and a second circumferential region (38), wherein the drive means (49) revolves about the second circumferential region (83), wherein the diameter of the second circumferential region (83) and of the drive means (49) supported thereon is smaller than the diameter of the first circumferential region (81).

4. The product guide according to any one of the preceding claims, wherein a second traction roller (37) is arranged rotatable around a third axis (300) on the carrier, wherein the third axis (300) is disposed parallel to the second axis (200) of the first traction roller (37) and is spaced therefrom in the conveying direction (500).

5. The product guide according to claim 4, wherein the first drive means (49) is arranged to drive the first and second traction rollers (37).

6. The product guide according to any one of the preceding claims, wherein the carrier (41) comprises first and second traction rollers (37) and a tension roller (63), wherein the tension roller (36) is substantially interposed between the first and second traction rollers (37).

7. The product guide according to any one of the preceding claims, wherein one or more freewheeling pinch rollers (67) are disposed downstream of the traction roller (37).

8. The product guide according to any one of the preceding claims, wherein one freewheeling pinch roller (67) is spring-mounted to be elastically pressable against a food product (111).

9. The product guide according to any one of the preceding claims, wherein one or more freewheeling pinch rollers (67) are disposed on the carrier (41) to be pivotable about a common rotation axis

10. The product guide according to any one of the preceding claims, wherein two separate pinch rollers (67) are disposed on a rocker (87) rotatable around a second axis (200) downstream and upstream of the traction roller (37), respectively.

11. The product guide according to any one of the preceding claims, wherein the carrier (41) comprises a pneumatic tensioner (91) coupled with a tension roller (63) configured to tension a revolving drive means (49, 53).

12. The product guide according to claim 11, wherein the pneumatic tensioner (91) comprises a second tension roller (95) disposed coaxially around a fourth axis (400) and the revolving drive means (49, 53) revolves about the first and second tension rollers (63, 95) and the pneumatic tensioner is configured to swivel the first tension roller (63) around the fourth axis (400) by means of a pneumatic piston (47) for tensioning or releasing the drive means (49, 53).

13. A food slicing machine (9) comprising a slicing unit (11) and a product guide (39) according to any one of the preceding claims, and
a holding member (43),
wherein the carrier (41) is releasably disposed on the holding member (43) to be pivoted around the first axis (100).

14. The food slicing machine according to claim 13, wherein the product guide (39) is an upper product guide (39) and wherein the food slicing machine (9) further comprises a lower food support (27), wherein a traction roller (37) of the upper product guide (39) is allocated to a traction roller (37) or a support roller (35) of the lower food support (27), in particular a traction roller (37) of the upper product guide (39) faces a traction roller (37) or a support roller (35) of the lower food support (27) substantially perpendicular to the conveying direction (500).

15. The food slicing machine according to claims 13 or 14, wherein the upper product guide (39) comprises a traction roller (37) and a pinch roller (67) and wherein the lower product support (27) comprises a traction roller (37) and a support roller (35) and one of the upper traction roller (37) and the pinch roller (67) is allocated to one of the lower traction roller (37) and the support roller (35), in particular faces the same substantially perpendicular to the conveying direction (500).

## Revendications

1. Guide de produit (39) pour guider des produits alimentaires (111) vers une unité de tranchage (11) d'une machine à trancher des aliments (9), comprenant
un rouleau de traction (37) qui est conçu pour venir en contact de convoyage avec un produit alimentaire (111) et pour contribuer à guider le produit alimentaire (111) vers l'unité de tranchage (11),
un support (41), dans lequel le support (41) peut être agencé de manière pivotante autour d'un premier axe (100),
un moyen d'entraînement (49), dans lequel le moyen d'entraînement (49) est configuré pour faire tourner le rouleau de traction (37) autour d'un deuxième axe (200),
dans lequel le rouleau de traction (37) est agencé sur le support (41) et le premier axe (100) est espacé du deuxième axe (200).

2. Guide de produit selon la revendication 1, dans lequel un rouleau d'entraînement (51) est agencé sur le support (41), un premier moyen d'entraînement (49) tourne autour du rouleau de traction (37) et du rouleau d'entraînement (51), et un deuxième moyen d'entraînement (53) tourne autour du rouleau d'entraînement (51) et d'un arbre d'entraînement (55).

3. Guide de produit selon l'une des revendications précédentes, dans lequel le rouleau de traction (37) comprend une première région périphérique (81) et une deuxième région périphérique (83), dans lequel le moyen d'entraînement (49) tourne autour de la deuxième région périphérique (83), dans lequel le diamètre de la deuxième région périphérique (83) et du moyen d'entraînement (49) supporté est inférieur au diamètre de la première région périphérique (81).

4. Guide de produit selon l'une des revendications précédentes, dans lequel un deuxième rouleau de traction (37) est agencé sur le support de manière à pouvoir tourner autour d'un troisième axe (300), dans lequel le troisième axe (300) est agencé de manière parallèle et espacée du deuxième axe (200) du premier rouleau de traction (37) dans la direction de convoyage (500).

5. Guide de produit selon la revendication 4, dans lequel le premier moyen d'entraînement (49) est agencé pour entraîner les premier et deuxième rouleaux de traction (37).

6. Guide de produit selon l'une des revendications précédentes, dans lequel le support (41) comprend des premier et deuxième rouleaux de traction (37) et un rouleau tendeur (63), dans lequel le rouleau tendeur (63) est agencé sensiblement entre les premier et deuxième rouleaux de traction (37).

7. Guide de produit selon l'une des revendications précédentes, dans lequel un ou plusieurs rouleaux de pression en roue libre (67) sont agencés en aval du rouleau de traction (37).

8. Guide de produit selon l'une des revendications précédentes, dans lequel un rouleau de pression en roue libre (67) est monté sur ressort pour pouvoir être pressé élastiquement contre un produit alimentaire (111).

9. Guide de produit selon l'une des revendications précédentes, dans lequel un ou plusieurs rouleaux de pression en roue libre (67) sont agencés sur le support (41) de manière à pouvoir osciller autour d'un axe de rotation commun.

10. Guide de produit selon l'une des revendications précédentes, dans lequel respectivement un rouleau de pression (67) est agencé en aval et un rouleau de pression (67) est agencé en amont du rouleau de traction (37) sur un culbuteur (87) rotatif autour du deuxième axe (200).

11. Guide de produit selon l'une des revendications précédentes, dans lequel le support (41) comprend un tendeur pneumatique (91) connecté à un rouleau tendeur (63), qui est configuré pour tendre un moyen d'entraînement en rotation (49, 53).

12. Guide de produit selon la revendication 11, dans lequel le tendeur pneumatique (91) comprend un deuxième rouleau tendeur (95) qui est agencé coaxialement autour d'un quatrième axe (400), le moyen d'entraînement en rotation (49, 53) tourne autour des premier et deuxième rouleaux tendeurs (63, 95), et le tendeur pneumatique est configuré pour faire pivoter le premier rouleau tendeur (63) autour du quatrième axe (400) au moyen d'un piston pneumatique (47) pour tendre ou détendre le moyen d'entraînement (49, 53).

13. Machine à trancher des aliments (9) comprenant une unité de tranchage (11) et un guide de produit (39) selon l'une des revendications précédentes ainsi qu'un élément de maintien (43),
dans lequel le support (41) est agencé de manière amovible sur l'élément de maintien (43) et de manière à pouvoir pivoter autour du premier axe (100).

14. Machine à trancher des aliments selon la revendication 13, dans laquelle le guide de produit (39) est un guide de produit supérieur (39) et la machine à trancher des aliments (9) comprend en outre un support de produit inférieur (27), dans laquelle un rouleau de traction (37) du guide de produit supérieur (39) est associé à un rouleau de traction (37) ou à un rouleau de support (35) du support de produit inférieur (27), en particulier dans laquelle un rouleau de traction (37) du guide de produit supérieur (39) est opposé de façon sensiblement perpendiculaire à la direction de convoyage (500) à un rouleau de traction (37) ou à un rouleau de support (35) du support de produit inférieur (27).

15. Machine à trancher des aliments selon la revendication 13 ou 14, dans laquelle le guide de produit supérieur (39) comprend un rouleau de traction (37) et un rouleau de pression (67), le support de produit inférieur (27) comprend un rouleau de traction (37) et un rouleau de support (35), et un rouleau parmi le rouleau de traction supérieur (37) et le rouleau de pression (67) est respectivement associé à un rouleau parmi le rouleau de traction inférieur (37) et le rouleau de support (35), en particulier lui est opposé de façon sensiblement perpendiculaire à la direction de convoyage (500).
